Europäisches Patentamt

European Patent Office

Office européen des brevets

(19)

(11) Veröffentlichungsnummer: **0 274 715 B1**

# EUROPÄISCHE PATENTSCHRIFT

(12)

(45) Veröffentlichungstag der Patentschrift: **22.07.92**

(51) Int. Cl.⁵: **H04Q  3/545**, G06F 15/16

(21) Anmeldenummer: **87118849.6**

(22) Anmeldetag: **18.12.87**

(54) **Verfahren zur Lastverteilung unter den zentralen Prozessoren einer Multiprozessor-Zentralsteuereinheit eines Vermittlungssystems.**

(30) Priorität: **12.01.87 DE 3700673**

(43) Veröffentlichungstag der Anmeldung:
**20.07.88 Patentblatt  88/29**

(45) Bekanntmachung des Hinweises auf die
Patenterteilung:
**22.07.92 Patentblatt  92/30**

(84) Benannte Vertragsstaaten:
**AT BE CH DE FR GB IT LI NL SE**

(56) Entgegenhaltungen:

**JAPAN TELECOMMUNICATIONS REVIEW,
Band 24, Nr. 1, Januari 1982, Seiten 20-28,
Tokyo, JP; Y. IWAI et al.: "D60 digital transit
switching system"**

**GTE AUTOMATIC ELECTRIC WORLD-WIDE
COMMUNICATIONS JOURNAL, Band 20, Nr. 2,
März/April 1982, Seiten 50-56, Northlake, Illinois, US; D. JACKSON et al.: "Impacts of
multiprocessing on GTD-5 EAX call processing and related operating system software
and data base"**

**GRINSEC: "Electronic switching", Nr. 2, 1983,**

**Kapitel II-7, "Control Equipment", Seiten
262,268-277, Elsevier Science Publishers,
Amsterdam, NL**

(73) Patentinhaber: **SIEMENS AKTIENGESELL-
SCHAFT
Wittelsbacherplatz 2
W-8000 München 2(DE)**

(72) Erfinder: **Weber, Anton, Dipl.-Ing.
Breithornstrasse 8
W-8000 München 82(DE)**
Erfinder: **Clark, Mark
Heiterwangerstrasse 10
W-8000 München 70(DE)**

## Beschreibung

Die Erfindung gebt von dem im Oberbegriff des Patentanspruches 1 genannten speziellen Verfahren aus, das für sich in der älteren deutschen Patentanmeldung DE-A-36 29 399.7 beschrieben ist und in Japan Telecommunications Review Bad 24 Nr., Januar 1982, Seiten 20-28 in dem Artikel "D60 digital transit switched system" von Y. Iwai et al.

Aus dem Oberbegriff des vorliegenden Patentanspruches ist erkennbar, daß die vorliegende Erfindung nicht in jedem Fall alle in der älteren Patentanmeldung beschriebenen Maßnahmen mitumfaßt.

In den weiteren älteren deutschen Patentanmeldungen DE-A-36 29 406.3 und DE-A-36 29 466.7 sind bereits Verfahren beschrieben, durch welche zentrale Prozessoren in einer zentralen Auftragsregistriereinrichtung bzw. mittels einer zentralen Auftragsregistriereinrichtung neue Aufträge abholen. Solche neuen Aufträge entsprechen im Regelfall Meldungen von Teilnehmeranschlüssen bzw. von Vermittlungssystemorganen, welche einer speziellen aufzubauenden oder bestehenden oder abzubauenden Verbindung zugeordnet sind und welche die Bearbeitung durch einen der zentralen Prozessoren erfordern.

Die Aufgabe der Erfindung, nämlich

zu vermeiden, daß zwei verschiedene zentrale Prozessoren gleichzeitig zwei, oder noch mehr, verschiedene Aufträge für ein und dieselbe Verbindung bearbeiten, obwohl vielleicht sogar die Bearbeitung des einen dieser Aufträge vom Ergebnis der Bearbeitung des anderen dieser Aufträge abhängt,

zu vermeiden, daß der erste bearbeitende Prozessor nicht oder erst zu spät die Existenz der zweiten Meldung feststellt, sowie

zu vermeiden, daß der den zweiten Auftrag besitzende zentrale Prozessor warten muß, bis er diesen Auftrag an den anderen zentralen Prozessor weiterreichen kann, nämlich bis dieser andere zentrale Prozessor seinen bisherigen Auftrag vollständig erledigt hat,
wird durch die im Patentanspruch angegebenen Maßnahmen gelöst.

Die Erfindung wird anhand des in den beiden Figuren gezeigten Ausführungsbeispiels weiter erläutert. Hierbei zeigen die

FIG 1 ein Beispiel für die wichtigsten Bestandteile eines Vermittlungssystems mit einer erfindungsgemäß betriebenen Multiprozessor-Zentralsteuereinheit, sowie

FIG 2 vergrößert und schematisch Datenflüsse zwischen dem zentralen Hauptspeicher und zwei zentralen Prozessoren.

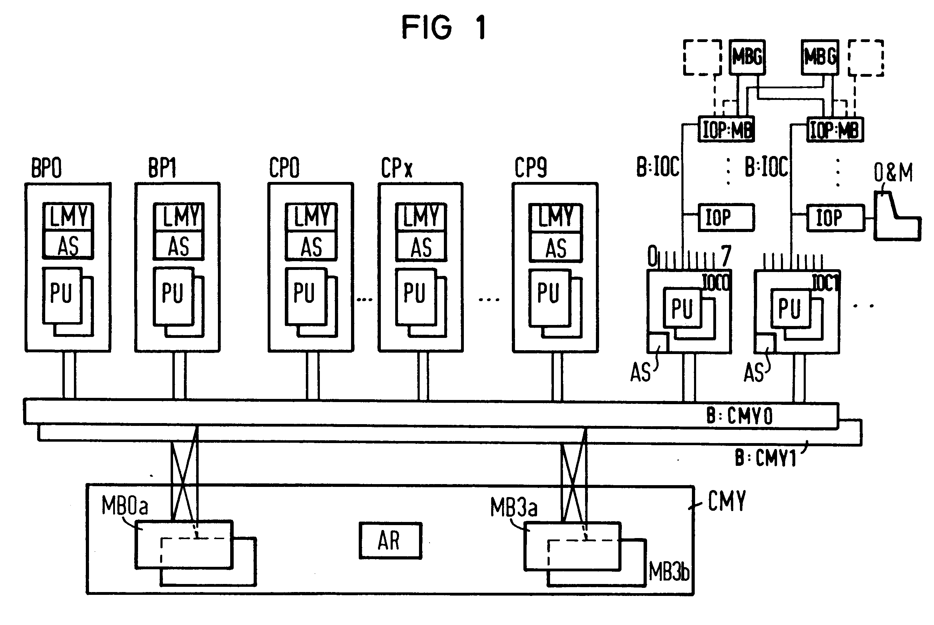

Das in FIG 1 gezeigte Beispiel entspricht weitgehend den Beispielen, die in den obengenannten deutschen Patentanmeldungen besprochen sind, insbesondere dem in der deutschen Patentanmeldung DE-A-36 29 399.7 ferner dem in EP-A2-135 931 besprochenen Beispiel. Die Kenntnis des Inhalts dieser Patentanmeldungen wird hier vollumfanglich vorausgesetzt, so daß es nicht nötig ist, das in der vorliegenden FIG 1 gezeigte Beispiel besonders detailliert zu erläutern. Es genügt, im wesentlichen die besonderen neuen Maßnahmen der Erfindung zu betonen.

FIG 1 zeigt also zentrale Prozessoren BP, CP, IOC, welche an ein zentrales Bussystem B:CMY parallel angeschlossen sind. Außerdem ist ein zentraler Hauptspeicher CMY, welcher mehrere Speicherblöcke MB enthält, an das zentrale Bussystem B:CMY angeschlossen.

Sobald ein zentraler Prozessor frei und arbeitsfähig ist, holt er selbsttätig bei einer zentralen Auftragsregistriereinrichtung AR einen dort gespeicherten neuen Auftrag zur Bearbeitung einer Vermittlungsaufgabe ab. Diese Auftragsregistriereinrichtung AR kann z. B. durch einen besonderen Abschnitt im Hauptspeicher CMY gebildet werden. Es handelt sich hierbei z.B. um einen Auftrag zu einem Detail der Maßnahme "Rufen" oder "Durchschalten".

Der zentrale Hauptspeicher CMY speichert jeweils die wichtigsten Daten über die derzeitigen Verbindungen im Vermittlungssystem.

Die verschiedenen zentralen Prozessoren haben über das zentrale Bussystem B:CMY jeweils Zugriff auf solche Daten.

Die in der Auftragsregistriereinrichtung AR gespeicherten Aufträge stellen im Regelfall Meldungen von Teilnehmern und/oder Vermittlungssystemorganen dar. Diese Aufträge stammen also z. B. von Teilnehmern, welche an die peripheren Meldungszwischenspeicher MBG angeschlossen sind. Bei den Vermittlungssystemorganen, welche eigene Meldungen/Aufträge in der Auftragsregistriereinrichtung AR hinterlegen, kann es sich im Prinzip um beliebige solche Organe handeln, also z. B. um Eingangs-Ausgangs-Prozessoren IOP, und Zwischenspeicher wie MBG oder angeschlossene Endgeräte wie die O&M-Station O&M, oder auch z. B. um Meldungen, welche von den zentralen Prozessoren BP, CP, IOC oder vom Bussystem B:CMY oder von Bestandteilen des Hauptspeichers CMY selber stammen.

Sobald einer der zentralen Prozessoren, z. B. CPx, in der Auftragsregistriereinrichtung AR einen Auftrag abholte, liest er im Regelfall die zu der betreffenden Verbindung gehörenden Daten aus dem zentralen Hauptspeicher CMY. Bei diesen Verbindungen handelt es sich jeweils um aufzubauende oder bestehende oder abzubauende Verbindungen. Derselbe zentrale Prozessor, in diesem Fall also CPx, fügt außerdem im Regelfall zumindest an einer einzigen entsprechenden charakteristischen Stelle einen Schutzcode zu diesen Daten der Verbindung hinzu, wobei dieser Schutzcode jeweils der Adresse dieses zentralen Prozessors CPx entspricht. Dieser zentrale Prozessor CPx veranlaßt also jeweils, daß den im Hauptspeicher CMY gespeicherten Daten einer Verbindung zumindest an einer einzigen charakteristischen Stelle jeweils ein der Adresse dieses zentralen Prozessors CPx entsprechender Schutzcode hinzugefügt wird, sobald, und solange, dieser zentrale Prozessor CPx einen diese Verbindung betreffenden abgeholten Auftrag bearbeitet. Sobald der betreffende zentrale Prozessor CPx diese Bearbeitung abgeschlossen hat, löscht er wieder den von ihm eingetragenen Schutzcode.

Jeder der zentralen Prozessoren BP, CP, IOC, der einen neuen Auftrag in der Auftragsregistriereinrichtung AR abholt, prüft beim anschließenden Lesen, i.allg. sogar vor dem Lesen, der im Hauptspeicher CMY gespeicherten Daten der Verbindung sofort, ob bereits ein einem anderen zentralen Prozessor zugeordneter Schutzcode für die betreffende Verbindung gespeichert ist. Falls der bei dieser Prüfung vorgefundene Schutzcode einem anderen zentralen Prozessor zugeordnet ist, bearbeitet dieser prüfende Prozessor im Regelfall nicht mehr den von ihm abgeholten neuen Auftrag und liest im Regelfall nicht mehr, jedenfalls im Regelfall nicht mehr vollständig, die Daten über die betreffende Verbindung aus dem Hauptspeicher CMY.

Jedem zentralen Prozessor BP, CP, IOC ist jeweils individuell ein eigener Auftragsspeicher AS zugeordnet, Diese können unmitelbar im betreffenden zentralen Prozessor angebracht sein, oder auch z. B. durch individuell dem jeweiligen Prozessor zugeordnete Speicherabschnitte im Hauptspeicher CMY gebildet sein. In diese Auftragsspeicher AS können zumindest weitere neue Aufträge eingeschrieben werden, welche dieselbe Verbindung betreffen, die der betreffende zentrale Prozessor derzeit gerade bearbeitet. Evtl. sind im Auftragsspeicher AS weitere Informationen gespeichert.

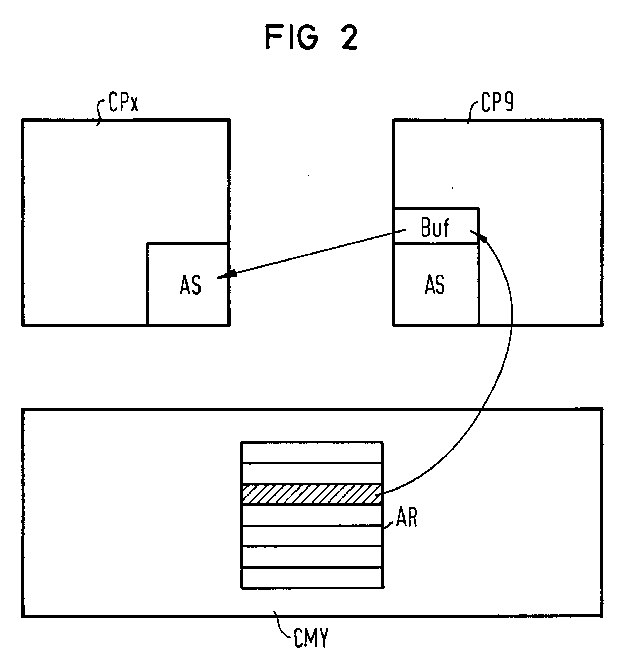

Wenn ein soeben einen Schutzcode prüfender Prozessor, hier genannt zweiter Prozessor, z. B. CP9, feststellt, daß dieser vorgefundene Schutzcode einem anderen zentralen Prozessor, z. B. CPx, zugeordnet ist, schreibt der prüfende Prozessor CP9 jeweils sofort seinen zuletzt aus der Auftragsregistriereinrichtung AR abgeholten neuen Auftrag sofort in den Auftragsspeicher AS des betreffenden anderen zentralen Prozessors CPx ein, so daß der zuletzt genannte zentrale Prozessor CPx, im allgemeinen sofort nach Beendigung seines von ihm bisher bearbeiteten Auftrages, seinerseits diesen weiteren neuen, vom Prozessor CP9 eingeschriebenen Auftrag selbst bearbeiten kann. Außerdem kann dadurch, daß der zentrale Prozessor CP9 seinen Auftrag an den Prozessor CPx sofort weitergeben konnte, nun seinerseits sofort einen neuen weiteren Auftrag in der Auftragsregistriereinrichtung AR abholen bzw. einen solchen weiteren Auftrag aus seinem eigenen Auftragsspeicher AS abrufen. Ein soeben einen Schutzcode prüfender zweiter zentraler Prozessor, z. B. CP9, kann also, wenn er feststellt, daß dieser Schutzcode einem anderen ersten zentralen Prozessor, z. B. CPx, zugeordnet ist, jeweils sofort seinen eigenen, zuletzt aus der Auftragsregistriereinrichtung AR abgeholten neuen zweiten Auftrag in den Auftragsspeicher AS des ersten zentralen Prozessors CPx einschreiben, so daß dieser erste zentrale Prozessor CPx, im allgemeinen sofort nach Beendigung seines bisherigen ersten Auftrages, seinerseits diesen neuen zweiten Auftrag selbst bearbeiten kann und daß der zweite zentrale Prozessor CP9 nun sofort einen anderen neuen dritten Auftrag in der Auftragsregistriereinrichtung AR abholen bzw. einen anderen neuen dritten Auftrag aus seinem eigenen Auftragsspeicher AS abrufen kann. Dies wird durch das in FIG 2 gezeigte Schema grob skizziert, wobei dieses Schema zeigt, daß der aus der Auftragsregistriereinrichtung AR zum zweiten Prozessor CP9 gelangte Auftrag an den Auftragsspeicher AS des ersten Prozessors CPx weitergereicht wurde.

Durch die Erfindung wurde also vermieden, daß die beiden verschiedenen zentralen Prozessoren CPx, CP9 gleichzeitig zwei verschiedene Auftrtäge für ein und dieselbe Verbindung bearbeiteten, obwohl vielleicht sogar die Bearbeitung des einen dieser Aufträge vom Ergebnis der Bearbeitung des anderen dieser Aufträge abhing. Außerdem wurde durch die Erfindung vermieden, daß der den einen Auftrag bearbeitende Prozessor CPx nicht, oder erst sehr spät, die Existenz des anderen Auftrages feststellte. Ferner wurde durch die Erfindung vermieden, daß der den zweiten Auftrag besitzende zweite Prozessor CP9 warten mußte, bis er diesen Auftrag an den anderen ersten Prozessor CPx weitergeben konnte, nämlich bis dieser andere erste Prozessor CPx seinen bisher bearbeiteten ersten Auftrag völlig erledigte.

In gleicher Weise arbeiten die übrigen Prozessoren, sobald sie Aufträge abholen. Bei einem solchen Vermittlungssyystem wird ein Verbindungsaufbau bzw. Verbindungsabbau in zeitlich aufeinanderfolgenden Bearbeitungsschritten durchgeführt. Diese Bearbeitungsschritte werden in der Zentralsteuereinheit durch Meldungen angestoßen, welche im Regelfall aus der vermittlungstechnischen Peripherie kommen, wobei diese Meldungen jeweils im Regelfall Aufträge darstellen. Diese Meldungen/Aufträge werden also in eine für alle zentralen Prozessoren gemeinsame Auftragsregistriereinrichtung AR eingetragen und von dort durch die einzelnen Prozessoren einzeln entnommen und bearbeitet.

Die Erfindung verhindert also erfolgreich, daß mehrere zentrale Prozessoren gleichzeitig Aufträge bearbeiten, die zu ein und derselben Verbindung gehören. D. h. jedoch nicht, daß der gesamte Verbindungsaufbau stets nur einem einzigen Prozessor zugeordnet ist; die Zuordnung eines Prozessors zu einer Verbindung besteht im Regelfall jeweils nur während der Dauer der Bearbeitung eines einzigen Auftrages. Der nächste Auftrag für dieselbe Verbindung kann also von einem beliebigen anderen der zentralen Prozessoren bearbeitet werden.

Die zeitlich parallele Bearbeitung von Aufträgen, die zu unterschiedlichen Verbindungen gehören, ist in einem solchen Multiprozessorsystem ohne weiteres möglich, weil alle Prozessoren jeweils Aufträge für eine andere Verbindung unabhängig voneinander gleichzeitig durchführen können.

Das Prinzip, daß zu einem Zeitpunkt eine bestimmte Verbindung nur von einem einzigen zentralen Prozessor bearbeitet wird, vereinfacht das Problem des Zugriffs auf gemeinsame Daten, die im Hauptspeicher CMY gespeichert sind. Es sind nämlich dann alle Daten, - d.h. eine Gruppe von Daten, die eine Verbindung derzeit zugeordnet sind -, in ihrer Gesamtheit während der Bearbeitung durch einen der Prozessoren gegen den Zugriff durch andere Prozessoren geschützt, - zumindest sind diese Daten gegen Änderungen geschützt, welcher ein solcher anderer Prozessor auslösen würde.

Ein weiteres Ziel der erfindungsgemäßen Lastverteilung ist also, Wartezeiten im Multiprozessorsystem zu vermeiden. Für den Fall, daß ein zentraler Prozessor einen Auftrag aus der Auftragsregistriereinrichtung AR entnimmt, die zu einer Verbindung gehört, die bereits von einem anderen zentralen Prozessor bearbeitet wird, soll möglichst keine anderen Wartezeiten oder sonstige Systemblockierungen bewirken können. Daher wurde angestrebt, daß nur jener einzige zentrale Prozessor, sobald er als erster einen Auftrag für eine Verbindung abholte, jene zentrale Datenstruktur, oder auch jene mehreren Datenstrukturen, aus dem Hauptspeicher CMY ausliest, die dieser betreffenden Verbindung eindeutig zugeordnet ist/sind. In diese zentrale Datenstruktur(en) trägt der bearbeitende Prozessor sofort seinen Schutzcode ein, z. B. seine eigene Prozessor-Nummer bzw. Prozeßinkarnations-Nummer. Sobald der Schutzcode eingetragen ist, wird im Regelfall kein anderer Prozessor mehr mit der Bearbeitung eines Auftrags für dieselbe Verbindung beginnen. Damit sind besonders auch alle ubrigen Verbindungsdaten dieser Verbindung gegen Mehrfachzugriff gesichert, d. h. sie stehen dem einen Prozessor exklusiv für die Dauer seiner Auftragsbearbeitung zur Verfügung. Am Ende der Auftragsbearbeitung wird der Schutzcode sofort wieder aus der zentralen Datenstruktur gelöscht, so daß dann im Regelfall Zeitverluste, vor allem auch entsprechende Warteschlangenbildungen, vermieden werden, welche entstehen würden, wenn erst viel später danach ein anderer zentraler Prozessor einen Auftrag für diese Verbindung abholt und anschließend diesen Auftrag stets an jenen Prozessor weitergäbe, der anfänglich einmal als erster einen Auftrag für diese Verbindung bearbeitet hatte.

Daher wird erfindugsgemäß folgendermaßen verfahren, wenn während der Auftragsbearbeitung für eine bestimmte Verbindung durch den einen zentralen Prozessor, z.B. CPx, ein anderer zentraler Prozessor, z.B. CP9, einen Auftrag für dieselbe Verbindung aus der Auftragsregistriereinrichtung AR abholt: Der Prozessor CP9 startet zuerst das Lesen der zugehörenden zentralen Datenstruktur für die Verbindung aus dem Hauptspeicher und prüft, ob bereits ein Schutzcode eines anderen Prozessors eingetragen ist. Wenn ja, unterläßt er das weitere Lesen und die weitere Bearbeitung dieses Auftrages und übergibt stattdessen diesen Auftrag zur weiteren Bearbeitung an den eingetragenen zentralen Prozessor, also z.B. an CPx. Danach ist der zentrale Prozessor CP9 wieder frei für andere Aufträge. Er holt sich dann den nächsten Auftrag aus der Auftragsregistriereinrichtung AR oder reiht sich in eine Warteschlange ein, in welcher sich die derzeit abholwilligen zentralen Prozessoren einordnen. Wartezeiten bzw. andere Systemverlustzeiten werden durch dieses Prinzip vermieden und der Prozessor CPx kann nach Beendigung einer gerade laufenden Auftragsbearbeitung als nächstes sofort mit der Bearbeitung jenes Auftrags beginnen, der ihm vom Prozessor CP9 übertragen wurde.

Die Erfindung nutzt also die Möglichkeit zu erkennen, daß eine Verbindung bereits durch einen anderen Prozessor bearbeitet wird, wobei der bearbeitende Prozessor jeweils eindeutig aus dem Schutzcode indentifiziert werden kann.

Bei dem gezeigten Beispiel ist jedem zentralen Prozessor BP, CP, IOC eine Anzeigeeinheit, z.B. ein entsprechendes Register, zugeordnet, welche anzeigt, ob der betreffende zentrale Prozessor, z.B. CPx, derzeit arbeitsfähig oder gestört ist. Ein beliebiger, genannt zweiter, zentraler Prozessor, z.B. CP9, prüft erst die Anzeige der Anzeigeeinheit eines anderen, genannt ersten, zentralen Prozessors, CPx, bevor dieser zweite zentrale Prozessor CP9 seinen neuen, genannt zweiten, Auftrag aus seinem Auftragsregister Buf in den Auftragsspeicher AS des ersten zentralen Prozessors CPx einschreibt. Nur dann, wenn die betreffende Anzeigeeinheit die Arbeitsfähigkeit des ersten zentralen Prozessors CPx anzeigt, schreibt der zweite zentrale Prozessor CP9 den neuen zweiten Auftrag aus seinem Auftragsregister Buf in den Arbeitsspeicher AS des ersten zentralen Prozessors CPx. Damit wird erreicht, daß fehlerhaft arbeitende, nicht arbeitsfähige Prozessoren keinen Auftrag übernehmen, den sie nicht ordentlich erledigen können und daß hängengebliebene Verbindungen und tote Verbindungsressourcen erkannt werden können. Auch wenn ein zentraler Prozessor wegen eines Hardware-Fehlers außer Betrieb genommen wurde, kann seine Anzeigeeinheit jedem anderem zentralen Prozessor die Arbeitsunfähigkeit anzeigen.

Wenn die Anzeigeeinheit des ersten zentralen Prozessors CPx seine Gestörtheit anzeigt, dann kann der zweite zentrale Prozessor CP9, statt seinen neuen Auftrag an den gestörten Prozessor CPx zu übertragen, nun auch diesen Auftrag selbst bearbeiten, wobei er sofort den zur betreffenden Verbindung bisher hinzugefügten Schutzcode mit seinem eigenen Schutzcode überschreibt. Jeder beliebige andere zentrale Prozessor kann dann beim Lesen der zur betreffenden Verbindung gehörenden Daten aus dem jetzt eingetragenen Schutzcode erkennen, welcher zentrale Prozessor derzeit wirklich in arbeitsfähigerweise einen Auftrag für die betreffende Verbindung bearbeitet.

Die im Hauptspeicher für eine Verbindung gespeicherten Daten können von einem zugriffswilligen zentralen Prozessor auf verschiedene Weise abgefragt werden. Z.B. können die Daten so strukturiert sein bzw. der betreffende Speicherabschnitt so aufgebaut und gesteuert sein, daß der betreffende zentrale Prozessor nur die Nummer eines Zeitkanals, welcher der Verbindung in einem der Systemorgane zugeordnet ist, nennt, um alle übrigen Daten auffinden zu können. Die Daten können jedoch auch so strukturiert und/oder der betreffende Speicherabschnitt so aufgebaut und gesteuert sein, daß der betreffende Speicher auch aufgrund anderer Suchbegriffe zu den Daten einer Verbindung zugreifen kann, z.B. aufgrund einer im Auftrag vorgefundenen Adresse eines Teilnehmers und/oder einer Adresse eines bestimmten Systemorgans/ Systembestandteils. Auf diese Weise sind z.B. auch Daten zu Verbindungen aufrufbar, welche derzeit zu einem bestimmten externen Speicher oder Organ aufgebaut werden oder bestehen oder abgebaut werden.

Weil zu den Daten ein und derselben Verbindung also auch dann ein Zugriff möglich ist, wenn der betreffende Auftrag nur ein mehr oder weniger beliebiges einzelnes Detail über die Verbindung enthält, kann bei dieser Weiterbildung der Erfindung ein erster zentraler Prozessor, z.B. CPx, die Daten einer Verbindung aufrufen, weil sein Auftrag einen Hinweis auf die spezielle Adresse eines Zeitkanals in einem speziellen Systemorgan enthält, wonach der betreffende erste Prozessor CPx seinen Schutzcode zu den Daten der betreffenden Verbindung hinzufügen kann. Ein zweiter anderer zentraler Prozessor kann aufgrund eines Auftrags, welcher ein anderes Detail der Verbindung als Hinweis enthält, z.B. einen anderen Zeitkanal in einem anderem Systemorgan dieses Vermittlungssystemes, im Prinzip ebenfalls zu den gesamten Daten dieser Verbindung zugreifen, - wobei er jedoch den Schutzcode des ersten zentralen Prozessors CPx entdecken wird, so daß er seinen Auftrag an den ersten zentralen Prozessor durch Einschreiben in dessen Auftragsspeicher AS übertragen kann. Die Erfindung bietet also einen sehr großen Komfort bei der Übergabe der Aufgabe von einem zentralen Prozessor an einen anderen zentralen Prozessor.

**Patentansprüche**

1. Verfahren zur Lastverteilung unter den zentralen Prozessoren(BP, CP, IOC) einer Multiprozessor-Zentralsteuereinheit eines Vermittlungssystemes, z.B. eines Fernsprech-Vermittlungssystemes,

   wobei an ein zentrales Bussystem(B:CMY) die zentralen Prozessoren (BP, CP, IOC), welche sich, falls sie frei und arbeitsfähig sind, jeweils selbsttätig bei einer zentralen Auftragsregistriereinrichtung (AR) einen dort gespeicherten Auftrag zur Bearbeitung einer Vermittlungsaufgabe, z.B. einen Auftrag zu einem Detail der Maßnahme "Rufen" oder "Durchschalten", abholen, sowie ein zentraler Hauptspeicher (CMY), welcher Daten über die derzeitigen Verbindungen in verschiedenen Speicherabschnitten speichert und zu welchem die zentralen Prozessoren(BP, CP, IOC) über das zentrale Bussystem(B:CMY) Zugriff haben, parallel angeschlossen sind,

   wobei ein zentraler Prozessor(z.B. CPx) jeweils veranlaßt, daß den Daten einer jeden aufzubauenden oder bestehenden oder abzubauenden Verbindung zumindest an einer einzigen charakteristischen Stelle jeweils ein der Adresse dieses zentralen Prozessors(CPx) entsprechender Schutzcode hinzugefügt wird, sobald und solange dieser zentrale Prozessor(CPx) einen diese Verbindung betreffenden abgeholten Auftrag bearbeitet,

   wobei der den Schutzcode hinzufügende zentrale Prozessor(CPx), sobald er seinen Auftrag erledigt hat, den von ihm eingetragenen Schutzcode für die betreffende Verbindung sofort wieder löscht,

   wobei jeder(z.B. CP9) der zentralen Prozessoren(BP, CP, IOC), welcher einen neuen Auftrag in der Auftragsregistrierungseinrichtung (AR) abholt, beim anschließenden Lesen, i. allg. sogar vor diesem Lesen, der im Hauptspeicher(CMY) gespeicherten Daten, welche die zu seinem(CP9) Auftrag gehörende Verbindung betreffen, sofort prüft, ob bereits ein einem anderen zentralen Prozessor(z.B. CPx) zugeordneter Schutzcode für die betreffende Verbindung gespeichert ist,

und wobei der den Schutzcode prüfende zentrale Prozessor(CP9) dann, wenn der Schutzcode einem anderen zentralen Prozessor(CP9) zugeordnet ist, im Regelfall seinen(CP9) abgeholten neuen Auftrag nicht bearbeitet und die betreffenden Daten, zumindest nicht mehr vollständig, liest, **dadurch gekennzeichnet,**

daß jedem zentralen Prozessor(BP, CP, IOC) individuell ein eigener Auftragsspeicher-(AS) zugeordnet ist, in welchem zumindest jene weiteren neuen Aufträge, welche dieselbe Verbindung betreffen, die der dem Auftragsspeicher(AS) zugeordnete zentrale Prozessor derzeit bearbeitet, eingeschrieben werden können,

daß ein soeben einen Schutzcode prüfender zweiter zentraler Prozessor(CP9), wenn er feststellt, daß dieser Schutzcode einem anderen ersten zentralen Prozessor(CPx) zugeordnet ist, jeweils sofort seinen (CP9) eigenen zuletzt aus der Auftragsregistriereinrichtung-(AR) abgeholten neuen zweiten Auftrag in den Auftragsspeicher(AS) des ersten zentralen Prozessors(CPx) einschreibt, so daß dieser erste zentrale Prozessor(CPx), im allgemeinen sofort nach Beendigung seines(CPx) bisherigen ersten Auftrages, seinerseits diesen neuen zweiten Auftrag selbst bearbeiten kann und daß der zweite zentrale Prozessor(CP9) nun sofort einen anderern neuen dritten Auftrag in der Auftragsregistriereinrichtung(AR) abholen bzw. einen anderen neuen dritten Auftrag aus seinem(CP9) eigenen Auftragsspeicher(AS) abrufen kann.

2. Verfahren nach Patentanspruch 1, **dadurch gekennzeichnet,**

daß jedem zentralen Prozessor(BP, CP, IOC) eine Anzeigeeinheit, z.B. ein Register, zugeordnet ist, welche anzeigt, ob der betreffende zentrale Prozessor(z.B. CPx) derzeit arbeitsfähig oder gestört ist,

und daß der zweite zentrale Prozessor-(CP9), bevor er den neuen zweiten Auftrag in den Auftragsspeicher(AS) des ersten zentralen Prozessors(CPx) einschreibt, erst die Anzeige der Anzeigeeinheit des ersten zentralen Prozessors(CPx) prüft und nur dann den neuen zweiten Auftrag in den Auftragsspeicher(AS) des ersten zentralen Prozessors (CPx) einschreibt, wenn die betreffende Anzeigeeinheit die Arbeitsfähigkeit des ersten zentralen Prozessors(CPx) anzeigt.

3. Verfahren nach Patentanspruch 2, **dadurch gekennzeichnet,**

daß der zweite zentrale Prozessor(CP9) dann, wenn die Anzeigeeinheit des ersten zentralen Prozessors(CPx) dessen(CPx) Gestörtheit anzeigt, den geprüften Schutzcode mit seinem(CP9) eigenen Schutzcode überschreibt und den neuen zweiten Auftrag selbst(CP9) bearbeitet.

## Claims

1. Method for load distribution among the central processors (BP, CP, IOC) of a multiprocessor central control unit of a switching system, for example a telephone switching system,

in which there are connected in parallel to a central bus system (B:CMY) the central processors (BP, CP, IOC) which, if they are free and operable, in each case automatically fetch from a central job registering means (AR) a job stored there for processing a switching task, for example a job relating to a detail of the "calling" or "switching through" measure, and also a central main memory (CMY) which stores data relating to the current connections in various memory sections and to which the central processors (BP, CP, IOC) have access via the central bus system (B:CMY),

in which a central processor (for example CPx) initiates in each case that a protective code corresponding to the address of this central processor (CPx) be appended in each case, at least at a single characteristic location, to the data of each connection to be established or each existing connection or each connection to be cleared, as soon as and as long as this central processor (CPx) is processing a job fetched that relates to this connection, in which, as soon as it has completed its job, the central processor (CPx) appending the protective code immediately erases the protective code it entered for the respective connection again,

in which each (for example CP9) of the central processors (BP, CP, IOC) which fetches a new job in the job registering means (AR) immediately checks, upon subsequent reading, as a rule even before this reading, of the data stored in the main memory (CMY) relating to the connection associated with its (CP9) job, whether a protective code assigned to another central processor (for example CPx) is already stored for the respective connection,

and in which, whenever the protective code is assigned to another central processor (CP9), the central processor (CP9) checking the protective code as a rule does not process its (CP9) new job fetched and does not read the respective data, at least not completely,

characterised in that each central processor (BP, CP, IOC) is individually assigned its own job memory (AS), in which it is possible to write at least those further new jobs that relate to the same connection which the central processor assigned to the job memory (AS) is currently processing, in that a second central processor (CP9) in the process of checking a protective code, if it detects that this protective code is assigned to another first central processor (CPx), immediately writes its (CP9) own new second job fetched last from the job registering means (AR) into the job memory (AS) of the first central processor (CPx), so that this first central processor CPx, in general immediately after completion of its (CPx) previous first job, in turn can process this new second job itself, and in that the second central processor (CP9) can now immediately fetch another new third job in the job registering means (AR) or can call up another new third job from its (CP9) own job memory (AS).

2. Method according to Patent Claim 1, characterised in that there is assigned to each central processor (BP, CP, IOC) an indicating unit, for example a register, which indicates whether the respective central processor (for example CPx) is currently operable or malfunctioning, and in that, before it writes the new second job into the job memory (AS) of the first central processor (CPx), the second central processor (CP9) first checks the indication of the indicating unit of the first central processor (CPx) and only writes the new second job into the job memory (AS) of the first central processor (CPx) if the respective indicating unit indicates that the first central processor (CPx) is operable.

3. Method according to Patent Claim 2, characterised in that the second central processor (CP9) overwrites the checked protective code with its (CP9) own protective code and processes the new second job itself (CP9) if the indicating unit of the first central processor (CPx) indicates that it (CPx) is malfunctioning.

**Revendications**

1. Procédé pour répartir la charge entre les processeurs centraux (BP, CP, IOC) d'une unité de commande centrale à processeurs multiples d'un système de commutation, par exemple d'un système de commutation téléphonique,

selon lequel un système de bus central (B:CMY) est raccordé en parallèle des processeurs centraux (BP, CP, IOC), qui, dans le cas où ils sont libres et aptes à fonctionner, appellent respectivement et automatiquement, dans un dispositif central d'enregistrement d'ordres (AR), un ordre mémorisé en cet endroit pour l'exécution d'une tâche de commutation, par exemple un ordre concernant un détail de la disposition "appel" ou "transmission directe", ainsi qu'une mémoire principale centrale (CMY), qui mémorise, dans différentes sections, des données concernant les liaisons actuelles et à laquelle les processeurs centraux (BP, CP, IOC) ont accès par l'intermédiaire du système de bus central (B:CMY), et

selon lequel un processeur central (par exemple CPx) décide respectivement qu'aux données de chaque liaison devant être établie ou existante ou devant être supprimée, on ajoute, au moins en un seul emplacement caractéristique, respectivement un code de protection correspondant à l'adresse de ce processeur central (CPx), dès et tant que ce dernier traite un ordre appelé, concernant cette liaison, et

selon lequel lorsqu'il a exécuté son ordre, le processeur central (CPx), qui ajoute le code de protection, supprime à nouveau immédiatement le code de protection, qu'il a introduit, pour la liaison considérée, et

selon lequel chacun (par exemple CP9) des processeurs centraux (BP, CP, IOC), qui appelle un nouvel ordre dans le dispositif d'enregistrement d'ordres (AR), contrôle immédiatement lors de la lecture ultérieure, et en général même avant cette lecture, des données mémorisées dans la mémoire principale (CMY), quelles données concernent la liaison qui est associée à l'ordre (de CP9), si un code de protection, associé à un autre processeur central (par exemple CPx), est déjà mémorisé pour la liaison concernée, et selon lequel, lorsque le code de protection est associé à un autre processeur central (CP9), ce processeur central (CP9), qui contrôle le code de protection, ne traite en général pas le nouvel ordre qu'il (CP9) a appelé, et lit, au moins d'une manière qui n'est plus complète, les données concernées,

caractérisé par le fait qu'à chaque processeur central (BP, CP, IOC) est associée individuellement une mémoire particulière d'ordres (AS), dans laquelle peuvent être enregistrés au moins tous les autres nouveaux ordres, qui concernent cette même liaison que le processeur central, associé à la mémoire d'ordres (AS), traite actuellement, et que lorsqu'un second processeur central (CP9), qui contrôle précisément un code de protection, établit que ce dernier est associé à un autre premier processeur central (CPx), le second processeur central introduit respectivement immédiatement son nouveau second ordre qui lui (CP9) est propre, appelé en dernier à partir du dispositif d'enregistrement d'ordres (AR), dans la mémoire d'ordres (AS) du premier processeur central (CPx), de sorte que ce premier processeur central (CPx) peut traiter lui-même, en général immédiatement à la fin du premier ordre antérieur de ce processeur (CPx), pour sa part ce nouveau second ordre, et que le second processeur central (CP9) peut retirer immédiatement un autre nouveau troisième ordre dans le dispositif d'enregistrement d'ordres (AR) ou appeler un autre nouveau troisième ordre à partir de la mémoire d'ordres (AS) qui lui (CP9) est propre.

2. Procédé suivant la revendication 1, caractérisé par le fait
   qu'à chaque processeur central (BP, CP, IOC) est associée une unité d'affichage, par exemple un registre qui indique si le processeur central concerné (par exemple CPx) est apte à travailler ou est perturbé, et
   qu'avant que le second processeur central (CP9) enregistre le nouveau second ordre dans la mémoire d'ordres (AS) du premier processeur central (CPx), le second processeur central contrôle tout d'abord l'affichage de l'unité d'affichage du premier processeur central (CPx) et enregistre ensuite seulement, le nouveau second ordre dans la mémoire d'ordres (AS) du premier processeur central (CPx), lorsque l'unité d'affichage concernée indique l'aptitude au travail du premier processeur central (CPx).

3. Procédé suivant la revendication 2, caractérisé par le fait que lorsque l'unité d'affichage du premier processeur central (CPx) affiche l'état perturbé de ce processeur, le second processeur central (CP9) enregistre, en surinscription, le code de protection contrôlé, avec le code de protection qui est propre à ce processeur (CP9) et traite lui-même (CP9) le nouveau second ordre.

# FIG 1

EP 0 274 715 B1

# FIG 2